# EUROPEAN PATENT APPLICATION

(11) **EP 2 295 824 A2**
(43) Date of publication of application: **16.03.2011**
(21) Application number: 10009303.8
(22) Date of filing: 07.09.2010
(51) Int. Cl.: F16C 11/06

(54) **Ball-joint dust cover**

(30) Priority: 15.09.2009 JP 2009212653
(71) Applicant: Carl Freudenberg KG, 69469 Weinheim (DE)
(72) Inventor: Niwa, Hidekazu, Omaezaki-shi Shizuoka-ken (JP)

(57) **Abstract**

To provide a durable ball-joint dust cover (6) capable of efficiently preventing dust from entering into a dust cover even when a small diameter opening slides inside a ferrule toward a spherical head portion (2) in the case where an inclined angle of a ball stud with respect to a socket is large (in the case where an oscillation angle is large). A ball-joint dust cover formed of a rubberlike elastic material and having a configuration in which a spherical head portion (2) formed at one end of a ball stud (1) is held inside a socket, a shaft at the other end of the ball stud is clamped and fixed to a knuckle (5), a one-end large diameter opening (8) is fixed and held to the outer peripheral surface of the socket (3) by an annular pressing ring (7), and the other-end small diameter opening is held to the shaft through a ferrule (9) having a substantially U-shaped cross-section, wherein a front end (911) of a radial portion (91) of the ferrule on the side of the knuckle is bent toward the small diameter opening (15) so as to form an outer-peripheral-side cylindrical portion (92).

## Description

### BACKGROUND OF THE INVENTION

### Field of the Invention

The present invention relates to a ball-joint dust cover.

Further, the present invention relates to a ball-joint dust cover that is used in a suspension device, a steering device, and the like of a vehicle.

### Description of the Related Art

As a ball joint equipped with a dust cover used for dust protection and water proofing of a ball-joint connection portion, a ball-joint dust cover previously disclosed in Japanese Patent Application Laid-Open No. 2009-024834 is shown in Fig. 5.

The ball-joint dust cover has a seal structure in which a spherical head portion 200 formed at one end of a ball stud 100 is held inside a socket 300.

Then, a shaft 400 at the other end of the ball stud 100 is clamped and fixed to a knuckle 500.

On the other hand, a one-end large diameter opening 800 of the rubberlike elastic dust cover 600 is fixed and held to the outer peripheral surface of the socket 300 by an annular pressing ring 700, and the other-end small diameter opening 150 is held by the shaft 400.

The small diameter opening 150 of the existing dust cover 600 is provided with a dust lip 160 that is pressed by the lower surface of the knuckle 500 and suppresses dust from entering the dust cover 600.

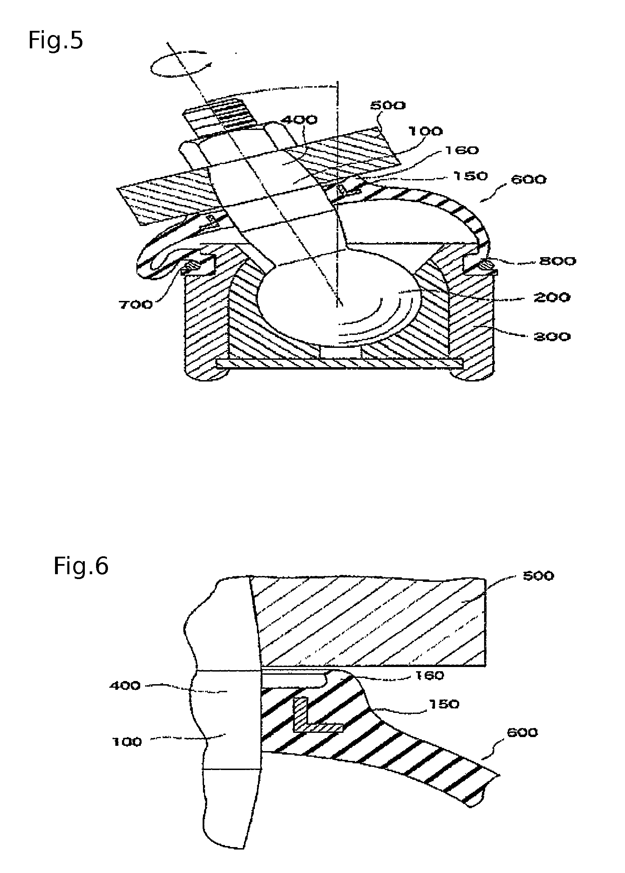

However, when an inclination angle of the ball stud 100 with respect to the socket 300 is large (when an oscillation angle is large), as shown in Fig. 6, there is a possibility that the small diameter opening 150 may slide on the shaft 400 of the ball stud 100 toward the spherical head portion 200.

Then, there is a problem that the dust lip 160 is deformed toward the shaft 400 (the inner side of the radial direction) of the ball stud 100 since the contact between the lower surface of the knuckle 500 and the dust lip 160 is released in accordance with the sliding movement of the small diameter opening 150.

As a result, there are problems that the function of the dust lip 160 is damaged and dust enters the dust cover 600.

Therefore, as shown in Fig. 7, Japanese Patent Application Laid-Open No. 2001-323923 proposes a technique in which a metallic ferrule 900 having a substantially U-shaped cross-section is fitted and fixed to the shaft 400 of the ball stud 100, and the small diameter opening 150 of the dust cover 600 is held inside the ferrule 900.

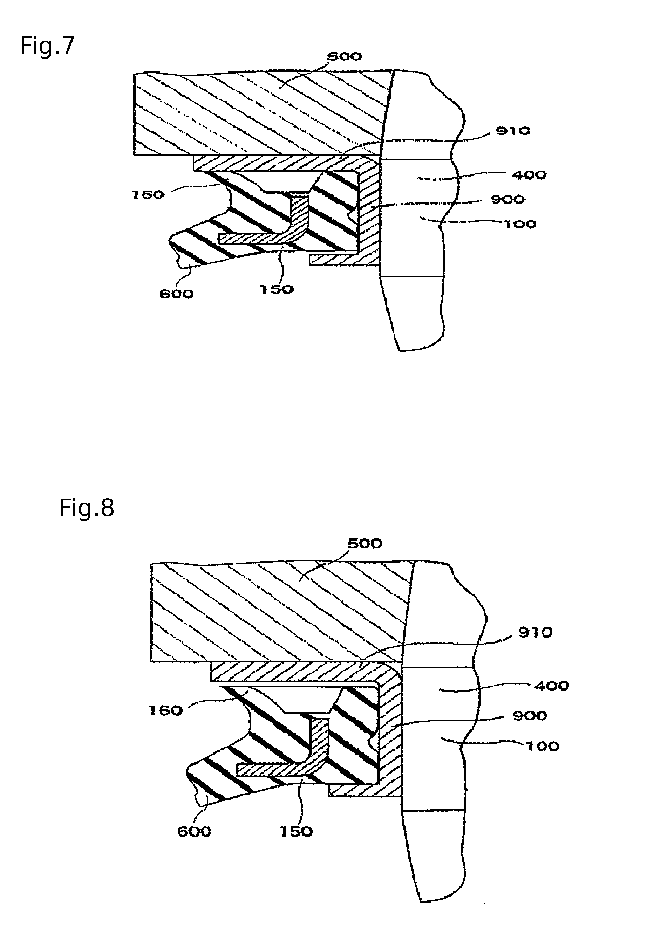

However, even when the ferrule 900 is used, if an inclination angle of the ball stud 100 with respect to a socket (not shown) is large (when an oscillation angle is large), as shown in Fig. 7, there is a possibility that the small diameter opening 150 may slide inside the ferrule 900 toward the spherical head portion (the downside of the drawing).

As a result, as shown in Fig. 8, the dust lip 160 is spaced away from a radial portion 910 on the side of the knuckle 500 of the ferrule 900, and the function of the dust lip 160 is degraded, thereby causing a problem that dust enters the dust cover 600.

### SUMMARY OF THE INVENTION

The present invention is contrived in consideration of such problems, and an object of the invention is to provide a ball-joint dust cover capable of being used for a long period of time by effectively suppressing dust from entering a dust cover even when a small diameter opening slides inside a ferrule toward a spherical head portion in the case where an inclination angle of a ball stud with respect to a socket is large (in the case where an oscillation angle is large).

According to an aspect of the invention, there is provided a ball-joint dust cover formed of a rubberlike elastic material and having a configuration in which a spherical head portion formed at one end of a ball stud is held inside a socket, a shaft at the other end of the ball stud is clamped and fixed to a knuckle, a one-end large diameter opening is fixed and held to the outer peripheral surface of the socket by an annular pressing ring, and the other-end small diameter opening is held to the shaft through a ferrule having a substantially U-shaped cross-section, wherein a front end of a radial portion of the ferrule on the side of the knuckle is bent toward the small diameter opening so as to form an outer-peripheral-side cylindrical portion.

The invention obtains the effects as below.

According to the ball-joint dust cover as claimed in a first aspect of the invention, even when the small diameter opening slides inside the ferrule toward the spherical head portion in the case where an inclination angle of the ball stud with respect to the socket is large (when an oscillation angle is large), it is possible to further reliably suppress dust from entering the dust cover due to the outer-peripheral-side cylindrical portion.

According to the ball-joint dust cover as claimed in a second aspect of the invention, even when the small diameter opening slides inside the ferrule toward the spherical head portion, the function of the dust lip provided in the small diameter opening of the dust cover is not degraded.

According to the ball-joint dust cover as claimed in a third aspect of the invention, even when an inclination angle of the ball stud with respect to the socket is large (when an oscillation angle is large), it is possible to further reliably suppress dust from entering the dust cover by using the dust lip.

According to the ball-joint dust cover as claimed in a fourth aspect of the invention, it is possible to reliably suppress dust from entering the dust cover using the dust lip without increasing a sliding resistance of the dust lip.

According to the ball-joint dust cover as claimed in a fifth aspect of the invention, even when the movement amount of the small diameter opening sliding inside the ferrule toward the spherical head portion is the maximum in the case where an inclination angle of the ball stud with respect to the socket is large (in the case where an oscillation angle is large), the function of the dust lip provided in the small diameter opening of the dust cover is not degraded.

According to the ball-joint dust cover as claimed in a sixth aspect of the invention, when the small diameter opening slides inside the ferrule toward the spherical head portion, the outer-peripheral-side cylindrical portion suppresses the sliding movement and the contact pressure of the dust lip with respect to the outer-peripheral-side cylindrical portion further increases, thereby further reliably suppressing the leakage of grease inside the dust cover.

### BRIEF DESCRIPTION OF THE DRAWINGS

Fig. 1 is a longitudinal sectional view illustrating a ball-joint dust cover according to a first embodiment of the invention.
Fig. 2 is an enlarged view illustrating a main part of Fig. 1.
Fig. 3 is a diagram illustrating the ball-joint dust cover according to a second embodiment of the invention in the same manner as Fig. 2.
Fig. 4 is a diagram illustrating the ball-joint dust cover according to a third embodiment of the invention, in the same manner as Fig. 2.
Fig. 5 is a longitudinal sectional view illustrating a ball-joint dust cover according to the related art.
Fig. 6 is an enlarged view illustrating a state in which a defect has occurred in a main part of the ball-joint dust cover shown in Fig. 5.
Fig. 7 is an enlarged view illustrating a main part of another ball-joint dust cover according to the related art.
Fig. 8 is a diagram illustrating a state in which a defect has occurred in the ball-joint dust cover shown in Fig. 7.

### DESCRIPTION OF THE PREFERRED EMBODIMENTS

Hereinafter, the preferred embodiments of the invention will be described.

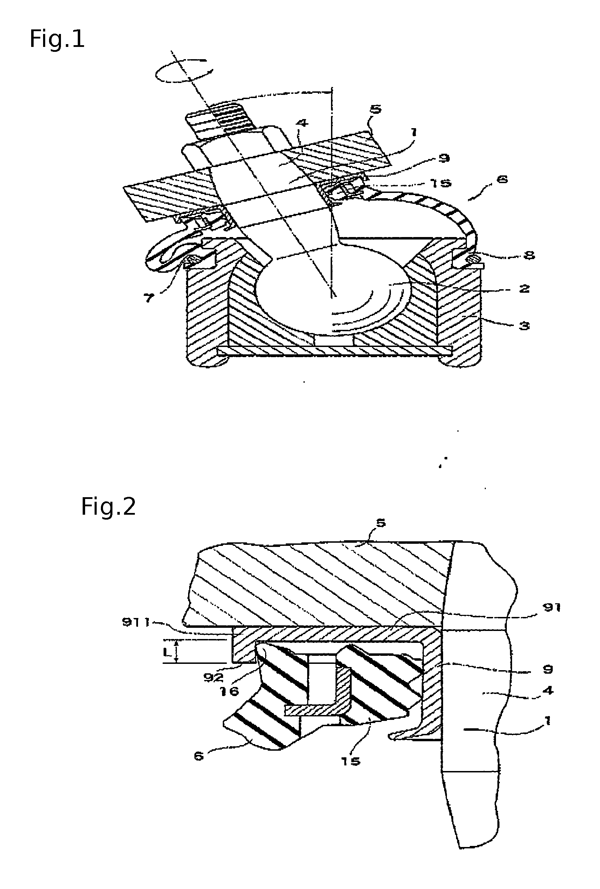

As shown in Figs. 1 and 2, a ball-joint dust cover according to the first embodiment of the invention has a configuration in which a spherical head portion 2 formed at one end of a ball stud 1 is held inside a socket 3, a shaft 4 at the other end of the ball stud 1 is clamped and fixed to a knuckle 5, a one-end large diameter opening 8 is fixed and held to the outer peripheral surface of the socket 3 by an annular pressing ring 7, and the other-end small diameter opening 15 is held to the shaft 4 through a ferrule 9 having a substantially U-shaped cross-section.

A front end 911 of a radial portion 91 of the ferrule 9 on the side of the knuckle 5 is bent toward the small diameter opening 15 so as to form an outer-peripheral-side cylindrical portion 92.

For this reason, even when the small diameter opening 15 slides inside the ferrule 9 toward the spherical head portion 2 in the case where an inclination angle of the ball stud 1 with respect to the socket 5 is large (when an oscillation angle is large), it is possible to further reliably suppress dust from entering the dust cover due to the existence of the outer-peripheral-side cylindrical portion 92.

Further, the small diameter opening 15 includes a first dust lip 16 which elastically comes into contact with the inner peripheral surface of the outer-peripheral-side cylindrical portion 92.

For this reason, even when the small diameter opening 15 slides inside the ferrule 9 toward the spherical head portion 2, it is possible to satisfactorily maintain the elastic contact state between the inner peripheral surface of the outer-peripheral-side cylindrical portion 92 and the first dust lip 16, and thus to further reliably suppress dust from entering the dust cover 6.

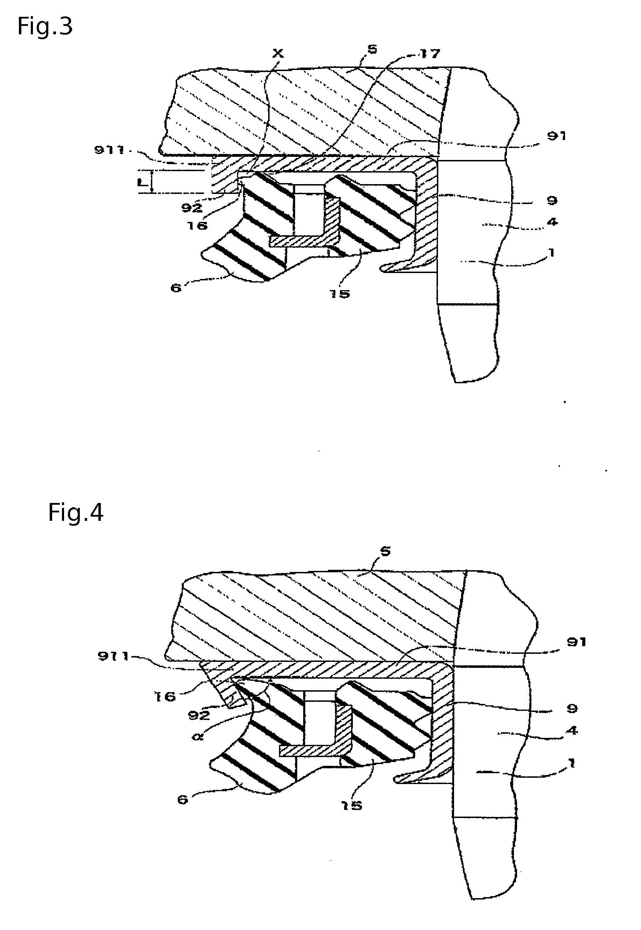

Next, the ball-joint dust cover according to the second embodiment of the invention will be described with reference to Fig. 3.

In addition to the first dust lip 16 described above, the small diameter opening 15 includes a second dust lip 17 which elastically comes into contact with the side surface (the lower surface of the drawing) of the radial portion 91.

Further, grease is enclosed in an empty space X surrounded by the first dust lip 16 and the second dust lip 17, thereby reliably suppressing dust from entering the dust cover using the dust lip without increasing sliding resistance of the dust lip.

Furthermore, in the first and second embodiments, an axial length L of the outer-peripheral-side cylindrical portion 92 is equal to or larger than a maximum movement distance in which the small diameter opening 15 moves inside the ferrule 9. Accordingly, even when the movement amount of the small diameter opening sliding inside the ferrule toward the spherical head portion is the maximum, the function of the dust lip provided in the small diameter opening of the dust cover is not degraded.

Next, the ball-joint dust cover according to the third embodiment of the invention will be described with reference to Fig. 4.

The difference from the first embodiment is that an angle α formed between the outer-peripheral-side cylindrical portion 92 and the radial portion 91 is an acute angle.

For this reason, when the small diameter opening 15 slides inside the ferrule 9 toward the spherical head portion 2, the outer-peripheral-side cylindrical portion 92 suppresses the sliding movement and the contact pressure of the first dust lip 16 with respect to the outer-peripheral-side cylindrical portion 92 further increases, thereby further reliably suppressing the leakage of grease inside the dust cover 6.

In addition, grease is enclosed inside the dust cover 6.

Further, the invention is not limited to the above-described embodiments, but may, of course, adopt various forms without departing from the concept of the invention.

The ball-joint dust cover of the invention may be used in the suspension device, the steering device, and the like of the vehicle.

### [Description of Reference Numerals]

- 1:: BALL STUD
- 2:: SPHERICAL HEAD PORTION
- 3:: SOCKET
- 4:: SHAFT
- 5:: KNUCKLE
- 6:: DUST COVER
- 7:: PRESSING RING
- 8:: LARGE DIAMETER OPENING
- 9:: FERRULE
- 15:: SMALL DIAMETER OPENING
- 16:: FIRST DUST LIP
- 17:: SECOND DUST LIP
- 91:: RADIAL PORTION
- 92:: OUTER-PERIPHERAL-SIDE CYLINDRICAL PORTION

## Claims

1. A ball-joint dust cover (6) formed of a rubberlike elastic material and having a configuration in which a spherical head portion (2) formed at one end of a ball stud (1) is held inside a socket (3), a shaft (4) at the other end of the ball stud (1) is clamped and fixed to a knuckle (5), a one-end large diameter opening (8) is fixed and held to the outer peripheral surface of the socket (3) by an annular pressing ring (7), and the other-end small diameter opening (15) is held to the shaft (4) through a ferrule (9) having a substantially U-shaped cross-section,
wherein a front end (911) of a radial portion (91) of the ferrule (9) on the side of the knuckle (5) is bent toward the small diameter opening (15) so as to form an outer-peripheral-side cylindrical portion (92).

2. The ball-joint dust cover as claimed in claim 1,
wherein the small diameter opening (15) includes a first dust lip (16) which elastically comes into contact with the inner peripheral surface of the outer-peripheral-side cylindrical portion (92).

3. The ball-joint dust cover as claimed in claim 2,
wherein the small diameter opening (15) includes a second dust lip (17) which elastically comes into contact with the side surface of the radial portion (91).

4. The ball-joint dust cover as claimed in claim 3,
wherein grease is enclosed in an empty space (X) surrounded by the first dust lip (16) and the second dust lip (17).

5. The ball-joint dust cover as claimed in any one of claims 1 to 4, wherein an axial length (L) of the outer-peripheral-side cylindrical portion (92) is equal to or larger than a maximum movement distance in which the small diameter opening (15) moves inside the ferrule (9).

6. The ball-joint dust cover as claimed in any one of claims 1 to 5,
wherein an angle (α) formed between the outer-peripheral-side cylindrical portion (92) and the radial portion (91) is an acute angle.
